# EUROPEAN PATENT APPLICATION

(11) **EP 2 568 149 A1**
(43) Date of publication of application: **13.03.2013**
(21) Application number: 10851087.6
(22) Date of filing: 31.05.2010
(51) Int. Cl.: F02D 45/00, G01M 15/11, F02D 35/00, F02D 41/22

(54) **METHOD AND APPARATUS FOR DETECTING A MISFIRE OF AN INTERNAL COMBUSTION ENGINE**

(30) Priority: 04.05.2010 KR 20100041797
(71) Applicant: Stxengine Co., Ltd., Changwon, Gyeongsangnam-do 641-315 (KR)
(72) Inventor: OH, Kwang Suk, Changwon, Gyeongsangnam-do 641-120 (KR); PARK, Jeong Geun, Changwon, Gyeongsangnam-do 641-807 (KR); SEO, Seok Pan, Gimhae, Gyeongsangnam-do 621-831 (KR); SHIN, Jae Bong, Changwon, Gyeongsangnam-do 641-803 (KR)
(74) Representative: 2K Patentanwälte Blasberg Kewitz & Reichel
(86) International application number: PCT/KR2010/003448
(87) International publication number: WO 2011/138999

(57) **Abstract**

The present invention relates to a method and apparatus for detecting a misfire which may occur during the operation of an internal combustion engine, and which, in particular, not only detects a misfire, but also detects which cylinder of a multi-cylinder engine has misfired. The method and apparatus for detecting a misfire of an internal combustion engine according to the present invention involves detecting whether or not a misfire has occurred by means of the frequency which varies according to the rotational angular velocity of the rotating shaft of an engine, and quickly detecting which cylinder has misfired by matching the top dead center of a reference cylinder against the top dead centers of the individual cylinders, and using the peak position of the rotational angular velocity signal filtered by a band-pass filter. Therefore, by quickly detecting a misfire in an internal combustion engine and in which cylinder the misfire occurred, and taking preventative measures, an accident such as the stalling of the internal combustion engine can be prevented, and the service life thereof can be lengthened.

## Description

### Technical Field

The present invention relates to a method and apparatus for detecting a misfire which may occur during the operation of an internal combustion engine such as a diesel engine, a gas engine, and a gasoline engine, and in particular to a method and apparatus for detecting a misfire of an internal combustion engine, which makes it possible not only to detect a misfire but also to identify the cylinder in which the misfire has occurred using a simple structure.

### Background Art

Internal combustion engines currently being operated on earth include a diesel engine, a gas engine, a gasoline engine, and so on, and the way these engines are powered varies depending on the kinds of engines. However, powering these internal combustion engines commonly involves combustion of a fuel and combustion characteristics of engines have a significant effect on the performance of each engine.

In most of the internal combustion engines, failures to burn the fuel in a cylinder often occur during the operation of an engine for many different reasons, which is called misfiring. Such a misfire causes a variety of adverse affects on the operation of an engine. First, a misfire reduces torque generated which in turn deteriorates drive performance of an engine, incomplete combustion of a fuel produces an increased amount of emissions of environmentally hazardous substance, and there will be a higher possibility of damaging shaft elements such as a crankshaft, an intermediate shaft, flexible couplings, and so on. Among others, since a substantial damage to shaft elements may lead to the shutdown of an engine, there exists an urgent need for minimizing the risk and adverse effects resulting from the occurrence of misfires.

In the case of diesel engines for ships, pre-calculations are carried out under the assumption of a misfire from the stage of designing a shaft mechanism so as to predict in advance whether the harmful results remain within an acceptable range, and a plurality of regulations are in effect such as for determining the risk and safety of a ship by exposing the engine of the ship to a deliberate misfire in a sea trial in accordance with ship classification requirements. Furthermore, various international environmental regulations have been ratified lately such Kyoto Protocol, Certified Emission Reductions (CERs), and so on, and accordingly ships are also required to comply with exhaust emission standards. If a misfire occurs in the engine of a ship, the exhaust emissions from the engine of a ship may exceed the limit of such regulations, and accordingly it is necessary to minimize the occurrences of misfires.

Moreover, the occurrence of misfires also affects the efficiency of the maintenance of an engine, and if it is determined that an engine cannot be operated any further because of misfires, the cylinder with a misfire should be replaced immediately. In these days, as common internal combustion engines contain four or more cylinders in most cases, it is necessary to identify quickly which of the cylinders has misfired, and if it is not clear which cylinder has misfired, a full inspection is conducted for all of the cylinders in an engine to identify the cylinder with the misfire. Accordingly, a number of problems occur including a prolonged time for maintenance, and an inevitable delay to resume the operation of the engine, and so on. Therefore, in order to maintain a stable operation of an internal combustion engine, it is necessary to detect a misfire and to identify which of the cylinders has misfired as quickly as possible, so that the operator can respond immediately to the incident.

Research on the detection of misfires has actively been conducted mainly in the area of automobile engines. In this regard, though it is required by regulation to mount a control unit loaded with an algorithm capable of detecting misfires of an engine for automobiles operative in the state of California (OBD-II), there is no mandatory requirement for the detection of misfires of an engine in other areas.

In the case of diesel engines for ships, manufacturers of a flexible coupling which is a shaft connecting element or of a vibration damper which is a torsional damper often add a function of detecting misfires as an option available to an apparatus for monitoring the stability of their products. However, it is very rare to actually install an apparatus having the capability of detecting misfires and such an apparatus has not been yet proven whether it is possible to appropriately detect misfires in reality.

In order to detect misfires, it may be most reliable if pressure sensors are directly attached to the combustion chambers of an engine so as to directly monitor the combustion pressure; however, as pressure sensors are exposed to a combustion environment of high temperature/pressure, problems occur in relation to the service life of pressure sensors and associated cost. Accordingly, methods for indirectly detecting misfires have become the mainstream of research instead of a direct detection method, and the factors used in an algorithm for detecting misfires include the angular velocity of a rotating shaft, a pressure variation in exhaust gas of a closed engine, pressure signals inside a combustion chamber, vibration acceleration signals of an engine main body, and so on.

In the conventional methods of detecting misfires, there are mainly two different techniques one of which uses the angular velocity of an engine, whereas the other of which utilizes the vibration signals of an engine main body. The technique of using the angular velocity of an engine includes a method of determining that a misfire has occurred if the angular velocity drops below a preset level when there is an instant change in the rotational torque or angular velocity of an engine due to the occurrence of a fire, a method of determining the occurrence of a misfire by identifying a cylinder with a small variation in rotational torque in accordance with the variation of the angular velocity, a method of detecting a misfire by indexing the maximum/minimum values of the angular velocity in the strokes of cylinders and by comparing the size of indices to each other, a method of detecting a misfire by modeling the dynamics of an engine in a normal condition and by comparing measured angular velocities to each other in a statistical way, and so on. In the technique of utilizing the vibration signals of an engine main body, misfires are detected by patternizing the frequency spectrums of acceleration signals and by comparing the pattern of a normal operation with the pattern in the case of the occurrence of a misfire by cylinders.

However, though the methods for detecting misfires as discussed above may be effective in engines of automobiles which are standardized by models and are manufactured in mass production, it is not easy to model and compare the dynamics of engines or to set up a reference level in advance in the case of engines for ships or engines for power generation whose main options are likely to change depending on the requirements by customers. In addition, though it may be possible to detect or predict the occurrence of a misfire depending on the cases, it is not easy to obtain information about in which cylinder a misfire has occurred.

In other words, it is not easy to detect a misfire using the prior art methods of detecting misfires in the case of engines for ships or engines for power generation which have not been standardized, and it is even more difficult to identify in which cylinder a misfire has occurred.

### Disclosure of Invention

Thus, the present invention is designed to solve the prior art problems as discussed above, and it is an object of the present invention to provide a method and apparatus for detecting a misfire of an internal combustion engine, which still uses the angular velocity of an engine as a main factor for detecting a misfire, which can be universally applied to engines regardless of the types and options of engines, and which not only detects whether or not a misfire has occurred but also identifies in which cylinder the misfire has occurred.

It is another object of the invention to provide a method and apparatus for detecting a misfire of an internal combustion engine, which can simplify the procedure of processing signals and reduce the calculation time by making it possible to detect whether or not a misfire has occurred as well as to identify in which cylinder the misfire has occurred, using only the position signals of a reference cylinder and the angular velocity of an engine.

In order to accomplish the object, the present invention provides a method for detecting a misfire of an internal combustion engine, comprising the steps of: detecting an angular velocity of a rotating shaft of an engine and a top dead center (TDC) position of a reference cylinder; determining whether or not a misfire has occurred by comparing a rotational frequency according to the angular velocity with a frequency according to a rotation speed of the engine; if it is determined that a misfire has occurred, filtering to pass only a frequency corresponding to the rotation speed of the engine out of the signals according to the angular velocity; and, dividing a pulse signal according to the TDC position of the reference cylinder into the number of cylinders and determining a cylinder in a position corresponding to a peak value of a bandpass filter signal which has been filtered as a cylinder in which the misfire has occurred.

An apparatus for detecting a misfire of an internal combustion engine in accordance with the present invention comprises: a detection unit for respectively detecting an angular velocity of a rotating shaft of an engine and a top dead center (TDC) position of a reference cylinder; and, a signal processing unit for determining whether or not a misfire has occurred and for identifying in which cylinder the misfire has occurred by analyzing and processing an angular velocity signal and a TDC signal of the reference cylinder detected by the detection unit.

In accordance with the apparatus for detecting a misfire of an internal combustion engine of the present invention, the detection unit comprises an angular velocity detection unit for detecting the rotation of a rotating member provided in the engine and for generating a signal proportional to the angular velocity of the rotating member, and a reference cylinder detection unit for generating a signal at the TDC position of the reference cylinder.

Furthermore, in accordance with the apparatus for detecting a misfire of an internal combustion engine of the present invention, the signal processing unit comprises a first processing unit for analyzing and processing a pulse signal detected by the angular velocity detection unit in the time and frequency domain, and for determining whether or not a misfire has occurred by measuring a change in a frequency exhibiting a peak value; a bandpass filter for passing only a signal in a frequency band corresponding to a normal angular velocity of the engine, out of the pulse signals generated by the angular velocity detection unit; and, a second processing unit for identifying a cylinder in which the misfire has occurred by analyzing the pulse signal detected by the reference cylinder detection unit and the signal which has passed the bandpass filter.

Moreover, in accordance with the apparatus for detecting a misfire of an internal combustion engine of the present invention, the second processing unit divides an interval between the pulse signals detected by the reference cylinder detection unit into the number of cylinders to match the TDC position of each cylinder, and determines a cylinder which matches a peak position of a bandpass filter signal which has been filtered by the bandpass filter as a cylinder in which the misfire has occurred.

In addition, the apparatus for detecting a misfire of an internal combustion engine of the present invention further comprises a display device for displaying on a screen the signals and determination results processed by the signal processing unit, and the signal processing unit further comprises a transmission unit for transmitting processed results to the display device.

### [Effect of the Invention]

The method and apparatus for detecting a misfire of an internal combustion engine according to the present invention has an effect of detecting whether or not a misfire has occurred by means of a frequency which varies according to the angular velocity of the rotating shaft of an engine, and of quickly identifying in which cylinder the misfire has occurred in accordance with the peak position of the angular velocity signal filtered by the bandpass filter, by matching the TDC positions of individual cylinders against the TDC position of the reference cylinder.

Furthermore, the method and apparatus for detecting a misfire of an internal combustion engine according to the present invention has an effect of reducing emissions of environmentally hazardous substance with a quick response by an operator in the case of an occurrence of a misfire and of safely protecting shaft elements, by not only detecting the occurrence of a misfire but also quickly identifying in which cylinder the misfire has occurred.

Moreover, the method and apparatus for detecting a misfire of an internal combustion engine according to the present invention has an effect of preventing major accidents such as the stalling of an engine with a quick response to the cylinder with a misfire as well as of precluding a full inspection of cylinders in the case of a misfire because it is possible to identify in which cylinder the misfire has occurred at the same time when the misfire is detected in an engine with multiple cylinders.

### Brief Description of the Drawings

These and other features, aspects, and advantages of the present invention will help for better understanding with regard to the following description, appended claims, and accompanying drawings, in which like components are referred to by like reference numerals. In the drawings:
Fig. 1 is a schematic diagram conceptually illustrating a method and apparatus for detecting a misfire of an internal combustion engine according to the present invention,
Fig. 2 is a block diagram of an apparatus for detecting a misfire of an internal combustion engine according to the present invention,
Fig. 3 is a flow chart illustrating a method for detecting a misfire using an apparatus for detecting a misfire of an internal combustion engine according to the present invention,
Fig. 4 shows an angular velocity, a TDC signal of a reference cylinder, and whether a misfire has occurred over time, when a deliberate misfire has been induced in a general internal combustion engine to which the apparatus for detecting a misfire of an internal combustion engine according to the present invention is applied,
Fig. 5 is an enlarged view of #1 cylinder in Fig. 4,
Fig. 6 illustrates a bandpass filter signal and a peak frequency in a normal internal combustion engine,
Figs. 7 to 12 are views illustrating bandpass filter signals and peak frequencies when a misfire has occurred in each cylinder of an engine with six cylinders.

10: detection unit
11: angular velocity detection unit
12: reference cylinder detection unit
20: signal processing unit
21: first processing unit
22: bandpass filter
23: second processing unit
24: transmission unit
30: engine
31: projections
32: angular velocity sensor
33: reference projection
34: reference cylinder detection sensor
40: display device

### Best Mode for Carrying out the Invention

Hereinafter, a method and apparatus for detecting a misfire in an internal combustion engine according to the present invention will be described in detail with reference to the accompanying drawings.

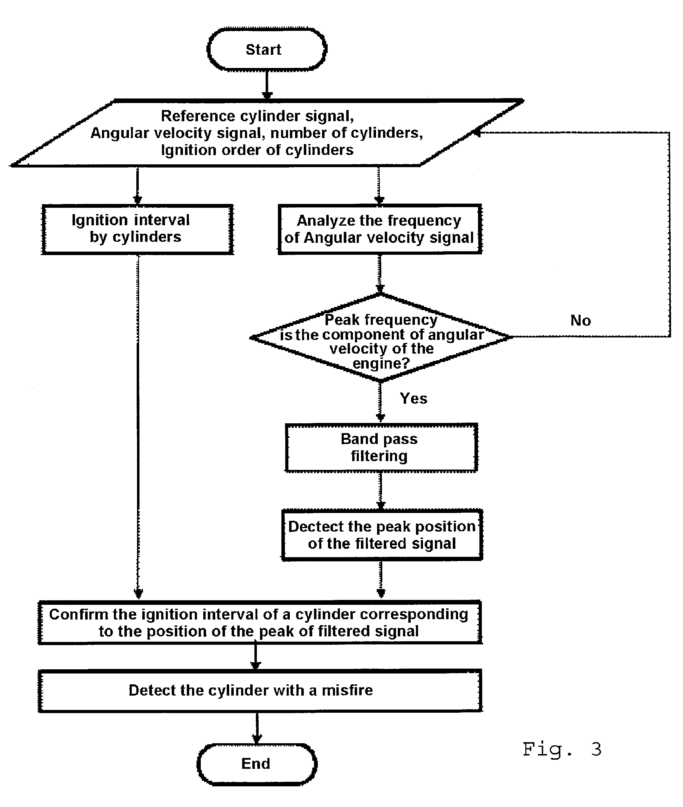

As shown in Fig. 3, a method for detecting a misfire of an internal combustion engine in accordance with the present invention comprises the steps of: detecting an angular velocity of a rotating shaft of an engine and a top dead center (TDC) position of a reference cylinder; determining whether or not a misfire has occurred by comparing a rotational frequency according to the angular velocity with a frequency according a rotation speed of the engine; if it is determined that a misfire has occurred, filtering to pass only a frequency corresponding to the rotation speed of the engine out of the signals according to the angular velocity; and, dividing a pulse signal according to the TDC position of the reference cylinder into the number of cylinders and determining a cylinder in a position corresponding to a peak value of a bandpass filter signal which has been filtered as a cylinder in which the misfire has occurred.

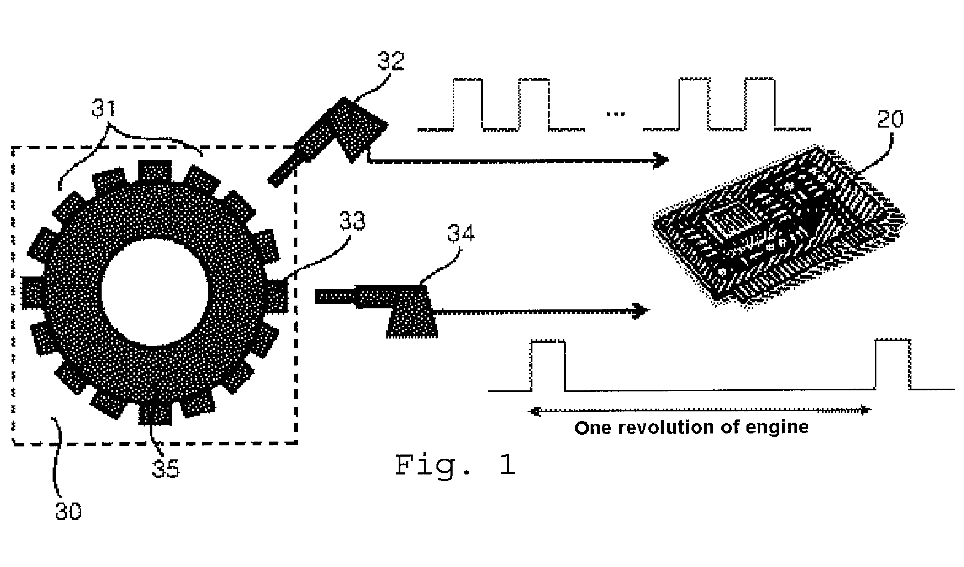

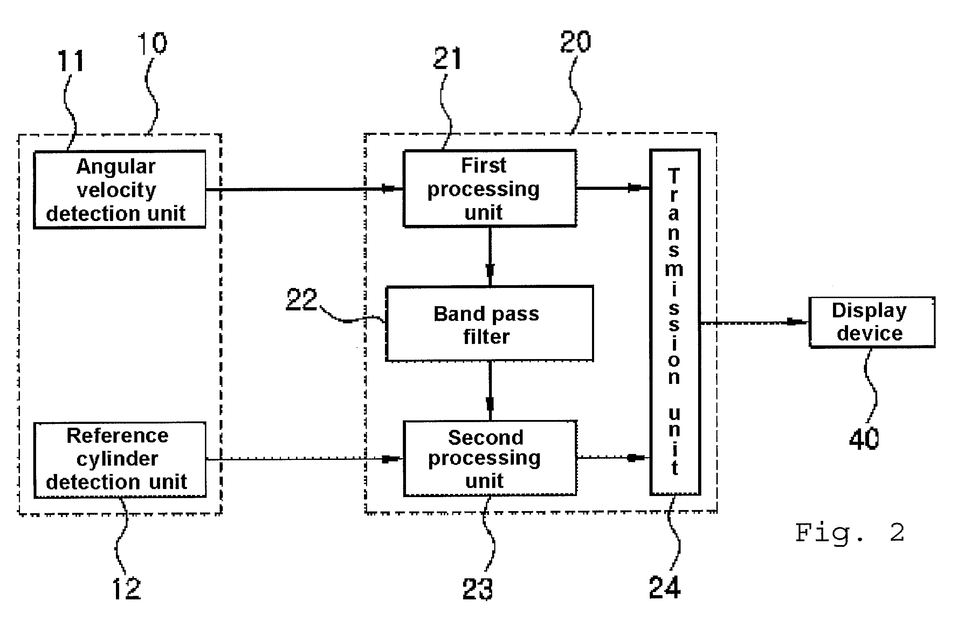

To this end, an apparatus for detecting a misfire of an internal combustion engine in accordance with the present invention comprises a detection unit 10 for respectively detecting an angular velocity of a rotating shaft of an engine and a top dead center (TDC) position of a reference cylinder; a signal processing unit 20 for determining whether or not a misfire has occurred and for identifying in which cylinder the misfire has occurred by analyzing and processing an angular velocity signal and a TDC signal of the reference cylinder detected by the detection unit 10; and, a display device 40 for externally displaying the angular velocity signal and a position of the reference cylinder processed by the signal processing unit 20, as shown in Figs. 1 and 2.

In addition, the detection unit 10 comprises an angular velocity detection unit 11 I for detecting the rotation of a rotating member 35, such as a crankshaft or a fly wheel, provided in an engine 30 and for generating a signal proportional to the angular velocity of the rotating shaft of the engine, and a reference cylinder detection unit 12 for generating a signal at the TDC position of the reference cylinder.

The angular velocity detection unit 11 is a pulse generator of a short-period type for generating a pulse signal proportional to the rotation speed of the rotating member 35 and uses an angular velocity sensor 32 or the like which generates a pulse signal whenever it detects projections 31 formed spaced apart with a predetermined interval along the periphery of the rotating member 35. The reference cylinder detection unit 12 is a pulse generator of a long-period type for generating one pulse signal per one rotation of the rotating member 35 and uses either a reference cylinder detection sensor 34 for detecting a reference projection 33 formed on the rotating member 35 or an encoder installed in the rotating member 35 for counting the number of rotations. Here, the reference cylinder detection unit 12 is designed to generate a pulse signal at the TDC position the cylinder which explodes first in accordance with the sequence of explosion of the engine 30.

Therefore, since the rotating shaft of the engine makes two rotations during one complete cycle in a four-stroke cycle engine, the reference cylinder detection unit 12 determines a reference cylinder when every second pulse signal detected is entered, and the reference cylinder detection unit 12 determines a reference cylinder by detecting only one pule signal during one rotation of the rotating shaft in a two-stroke cycle engine. However, as a two-stroke cycle engine used in ships will be mainly described in the present invention, the description will be made based on the assumption that one pulse signal is generated during one rotation of the rotating shaft of the engine.

The signal processing unit 20 comprises a first processing unit 21 for analyzing and processing the pulse signal detected by the angular velocity detection unit 11 in the time and frequency domain, and for determining whether or not a misfire has occurred by measuring a change in a frequency exhibiting a peak value; a bandpass filter 22 for passing only a signal in a frequency band corresponding to a normal angular velocity of the engine 30, out of the pulse signals generated by the angular velocity detection unit 11; a second processing unit 23 for identifying in which cylinder the misfire has occurred by analyzing the pulse signals detected by the reference cylinder detection unit 12 and the signal which has passed the bandpass filter 22; and, a transmission unit 24 for transmitting the signals processed by the first and second processing units (22, 23) to the display device 40.

The second processing unit 23 divides the interval between the pulse signals detected by the reference cylinder detection unit 12 into the number of cylinders and determines a cylinder which corresponds to the peak position of the bandpass filter signal which has been filtered by the bandpass filter 22, as the cylinder in which the misfire has occurred. The reason why the interval between the detected pulse signals is divided into the number of cylinders is that the present invention is based on a two-stroke cycle engine, and in the case of a four-stroke cycle engine, it is obvious to divide the interval between the detected pulse signals into one half of the number of cylinders.

The apparatus and method for detecting a misfire of an internal combustion engine of the present invention as constructed above makes it possible not only to detect whether or not a misfire has occurred but also to immediately identify in which cylinder the misfire has occurred in case of a misfire.

The angular velocity sensor 32 of the detection unit 10 senses the projections 31 1 attached to the rotating member 35 to regularly generate constant pulse signals, and these pulse signals are inputted to the first processing unit 21 of the signal processing unit 20. The first processing unit 21 uses these pulse signals to measure the angular velocity and determines whether or not a misfire has occurred based on the change in the frequency which generates maximum torque, or the frequency exhibiting a peak value. If the frequency exhibiting the peak value changes, it is determined that a misfire has occurred, and a signal of occurrence of a misfire is sent through the transmission unit 24 to the display device so as to display the occurrence of a misfire, thereby alerting the operator of the occurrence of a misfire.

In general, since the rotating member 35 of the engine 30 is considered a rotating body, if the angular velocity is analyzed in the frequency domain in the first processing unit 21, a maximum torque is generated to exhibit a peak value at the frequency of the value of the product of the number of cylinders and the frequency corresponding to the rotation speed of the rotating member 35. However, if a misfire occurs, a peak value appears at the frequency corresponding to the rotation speed of the rotating member 35 independent of the number of cylinders. Accordingly, the first processing unit 21 continuously monitors the angular velocity of the rotating member 35 and the change in the corresponding frequency, and determines the occurrence of a misfire in the case that the frequency of a peak value matches the frequency corresponding to the angular velocity of the rotating member 35.

If it is determined that a misfire has occurred as a result of the processing by the first processing unit 21, the angular velocity signal sent from the angular velocity sensor 32 is processed through the bandpass filter 22 which passes only the frequency band corresponding to the angular velocity. The bandpass filter 22 passes the frequency corresponding to the current rotation speed of the engine with the angular velocity signal as an input, and this frequency range of passage is called a bandwidth, frequencies other than this bandwidth being neglected. The location in which a peak value of the bandpass filter signal which has passed the bandpass filter 22 occurs represents the location with a misfire.

The reference cylinder detection unit 11 of the detection unit 10 detects the TDC position of the reference cylinder while the rotating member 35 of the engine 30 is rotating. That is, the reference cylinder detection sensor 34 is used to detect the reference projection 33 installed on the rotating member 35 or the TDC position of the reference cylinder is detected using the signal from the encoder installed on the rotating member 35. In this case, since the engine 30 is a two-stroke cycle engine, every rotation of the rotating member 35 of the engine 30 generates one pulse signal. Therefore, the interval between the pulse signals in accordance with the detection of the TDC of the reference cylinder is divided into the number of cylinders, and the TDC position of each cylinder is matched with each of the divided time intervals, in consideration of the time difference between the TDCs of respective cylinders. In this case, since the position in which the peak value of the bandpass filter signal occurs matches one of the TDC positions of the cylinders, the corresponding cylinder is determined to be the cylinder with a misfire and is displayed on the display device 40.

After all, the apparatus and method for detecting a misfire of an internal combustion engine according to the present invention can detect the occurrence of a misfire as well as immediately identify in which cylinder the misfire has occurred, with a simple structure such as an angular velocity detection unit for detecting the angular velocity of a rotating member of an engine and a reference cylinder detection unit for detecting the TDC position of the reference cylinder.

### <Experiment 1>

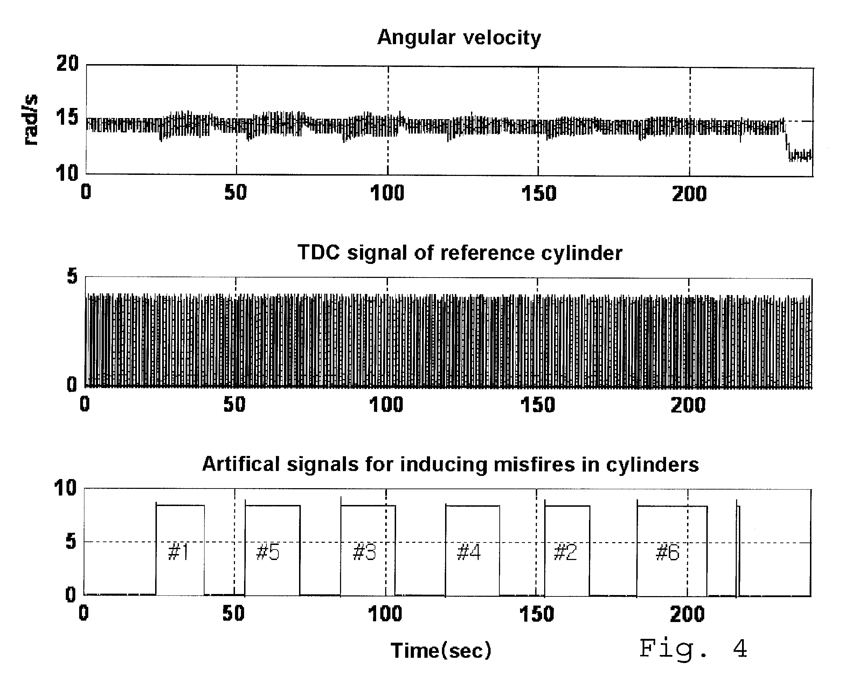

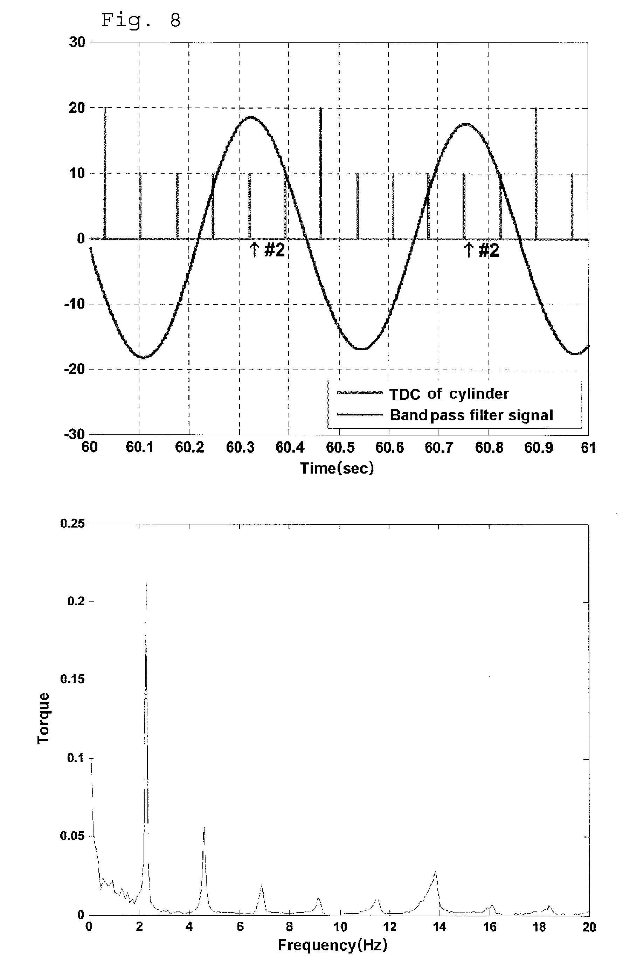

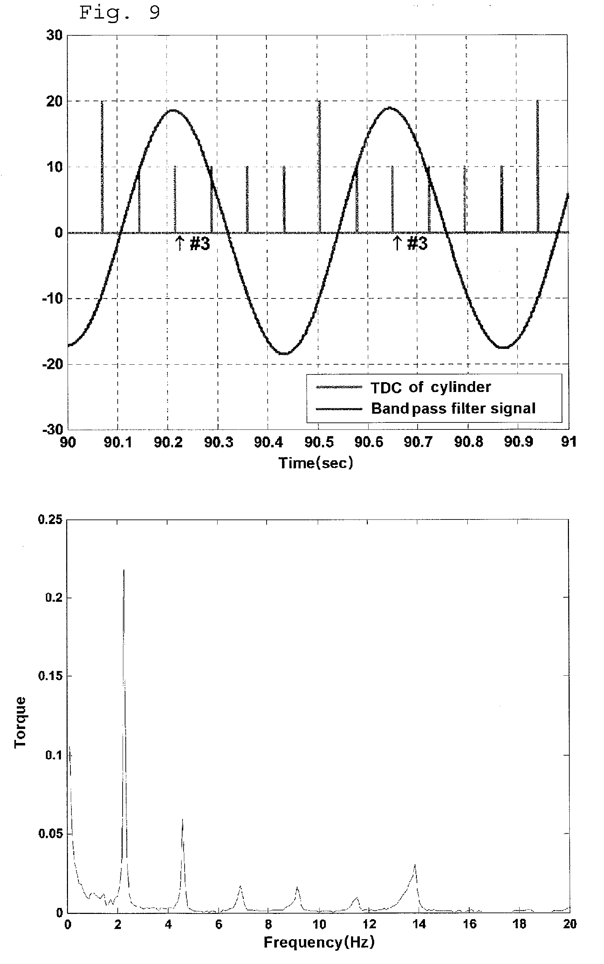

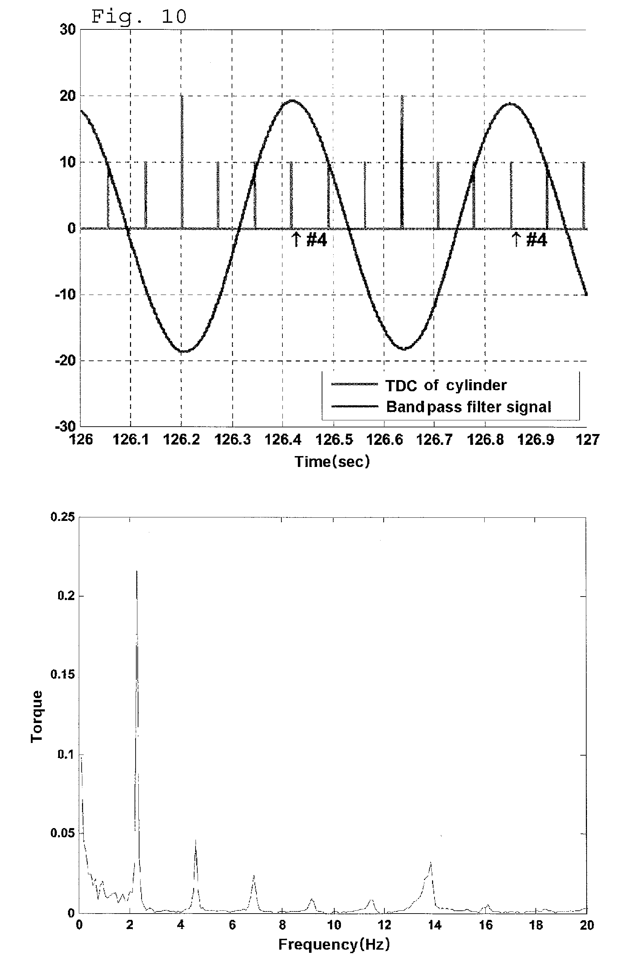

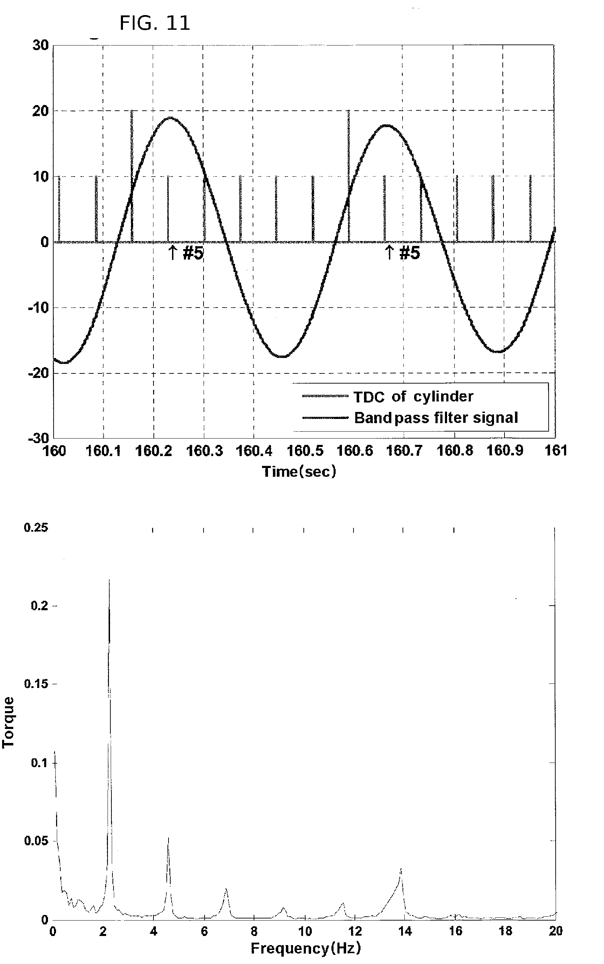

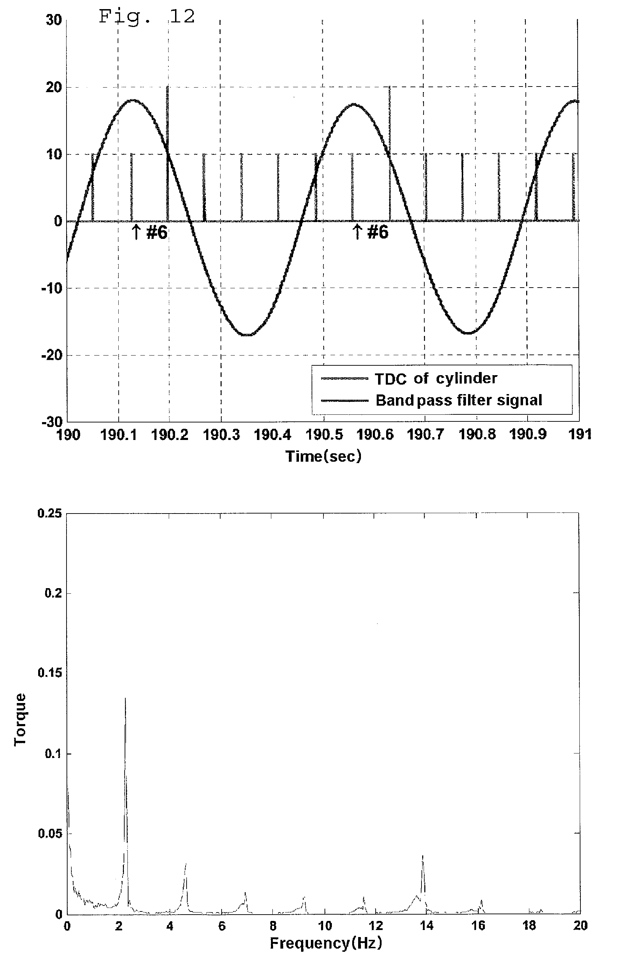

In order to check whether the detection of a misfire and the identification of a cylinder with a misfire using the apparatus and method for detecting a misfire of an internal combustion engine according to the present invention are accurate, experiments were conducted for deliberately inducing misfires in an engine under a test run at a factory and the results of the data analysis are shown in Figs. 4 to 12. In the experiments, #1 cylinder was used as a reference cylinder out of multiple cylinders in the engine, and the engine with six cylinders was used such that the time for reaching the TDC in each cylinder is in the following order: #1 cylinder, #5 cylinder, #3 cylinder, #4 cylinder, #2 cylinder, and #6 cylinder.

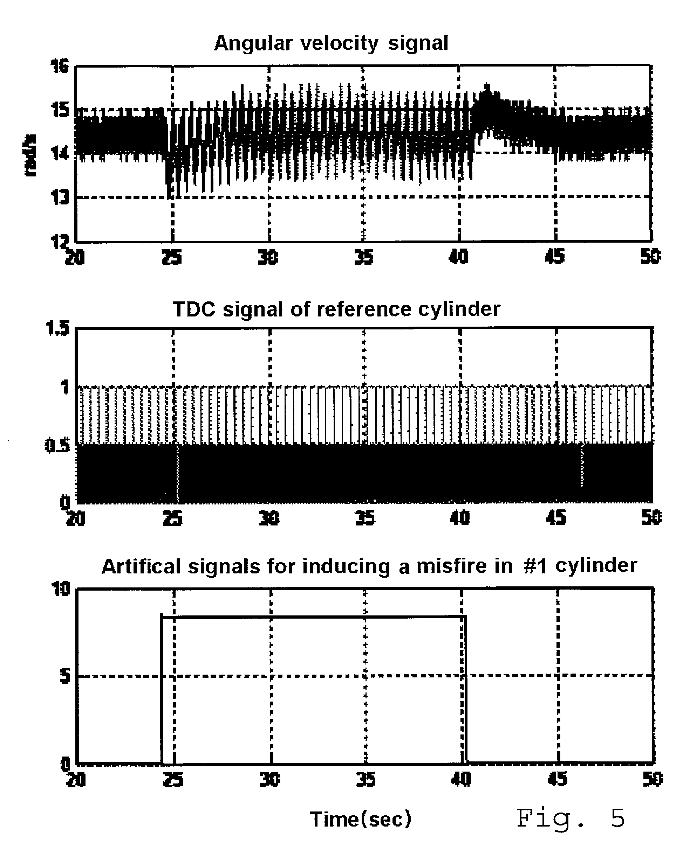

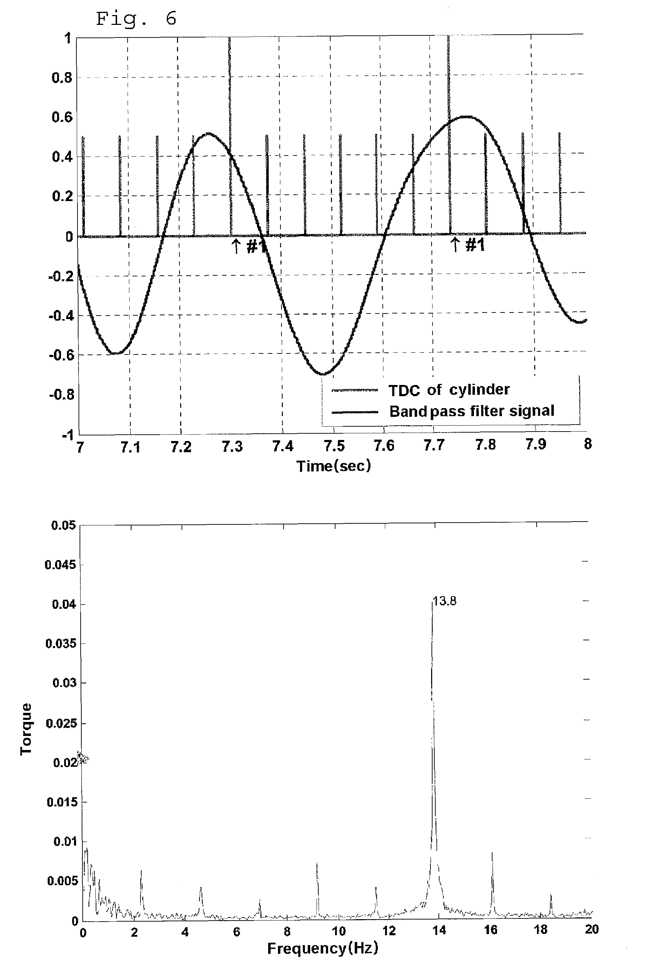

Fig. 4 shows the angular velocity detected by the angular velocity sensor, the TDC position of the reference cylinder detected by the reference cylinder detection sensor, and artificial signals for inducing misfires in the respective cylinders while misfires are being induced over time, in which the order of inducing misfires in the cylinders is #1, #5, #3, #4, #2, and #6, Fig. 5 is an enlarged view of #1 cylinder in Fig. 4, and Fig. 6 shows graphs illustrating the relationship between the bandpass filter signal and the TDC signal of the reference cylinder and the torque change over frequency, before the occurrence of a misfire. According to the graphs in Fig. 6, since the frequency at which a peak value appears is 13.8Hz which is six times of the frequency, 2.3Hz, corresponding to the rotation speed of the engine, it can be concluded that no misfire has occurred.

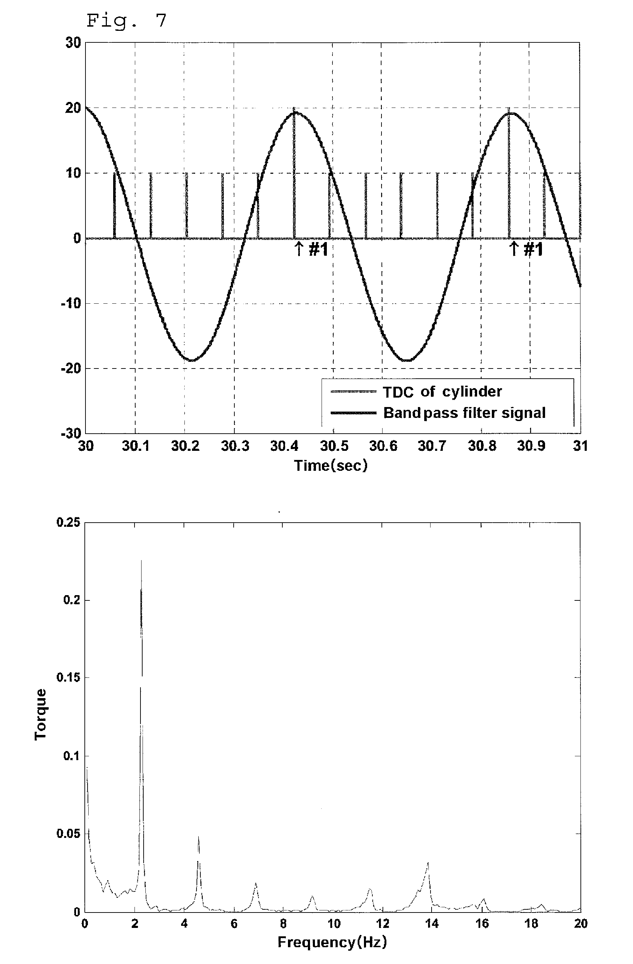

Figs. 7 to 12 show graphs illustrating the relationship between the bandpass filter signal and the TDC signal of the reference cylinder and the torque change over frequency, when a misfire has occurred in each cylinder. Based on the frequencies at which peak values appear in Figs. 7 to 12, since the peak values appear at around 2.3Hz which is the frequency corresponding to the rotation speed of the engine, it can be concluded that misfires have occurred. In addition, with reference to the graphs illustrating the bandpass filter signal and the TDC position of the reference cylinder in Figs. 7 to 12, since it is possible to recognize the cylinder with the TDC position corresponding to the position of the peak value of the bandpass filter signal, it is possible to identify the cylinder in which the misfire has occurred.

The present invention has been described in detail. However, it should be understood that the detailed description and specific examples, while indicating preferred embodiments of the invention, are given by way of illustration only, since various changes and modifications within the spirit and scope of the invention will become apparent to those skilled in the art from this detailed description.

## Claims

1. A method for detecting a misfire of an internal combustion engine, comprising the steps of:
detecting an angular velocity of a rotating shaft of an engine and a top dead center (TDC) position of a reference cylinder;
determining whether a misfire has occurred by comparing a rotational frequency according to the angular velocity and a frequency according to a rotation speed of the engine;
if it is determined that a misfire has occurred, filtering to pass only a frequency corresponding to the rotation speed of the engine, out of signals according to the angular velocity; and,
dividing a pulse signal according to the TDC position of the reference cylinder into the number of cylinders, and determining a cylinder in a position corresponding to a peak value of a bandpass filter signal which has been filtered,
as a cylinder in which the misfire has occurred.

2. An apparatus for detecting a misfire of an internal combustion engine, comprises:
a detection unit (10) for respectively detecting an angular velocity of a rotating shaft of an engine and a top dead center (TDC) position of a reference cylinder; and,
a signal processing unit (20) for determining whether a misfire has occurred and for identifying in which cylinder the misfire has occurred, by analyzing and processing an angular velocity signal and a TDC signal of the reference cylinder detected by the detection unit (10).

3. The apparatus according to claim 2, wherein the detection unit (10) comprises an angular velocity detection unit (11) for detecting the rotation of a rotating member (35) provided in the engine (30) and for generating a signal proportional to the angular velocity of the rotating member, and a reference cylinder detection unit (12) for generating a signal at the TDC position of the reference cylinder.

4. The apparatus according to claim 2, wherein the signal processing unit (20) comprises a first processing unit (21) for analyzing and processing a pulse signal detected by the angular velocity detection unit (11) in the time and frequency domain, and for determining whether a misfire has occurred by measuring a change in a frequency exhibiting a peak value; a bandpass filter (22) for passing only a signal in a frequency band corresponding to a normal angular velocity of the engine (30), out of pulse signals generated by the angular velocity detection unit (11); and, a second processing unit (23) for identifying a cylinder in which the misfire has occurred by analyzing the pulse signal detected by the reference cylinder detection unit (12) and the signal which has passed the bandpass filter (22).

5. The apparatus according to claim 4, wherein the second processing unit (23) divides an interval between the pulse signals detected by the reference cylinder detection unit (12) into the number of cylinders to match the TDC position of each cylinder, and determines a cylinder which matches a peak position of a bandpass filter signal which has been filtered by the bandpass filter (22), as a cylinder in which the misfire has occurred.

6. The apparatus according to claim 2, further comprising:
a display device (40) for displaying, on a screen, signals and determination results processed by the signal processing unit (20),
wherein the signal processing unit (20) further comprises a transmission unit (24) for transmitting processed results to the display device (40).
